# EUROPEAN PATENT APPLICATION

(11) **EP 4 645 283 A1**
(43) Date of publication of application: **05.11.2025**
(21) Application number: 25173280.6
(22) Date of filing: 29.04.2025
(51) Int. Cl.: G08G 5/21, G08G 5/24, G08G 5/265, G08G 5/51, G08G 5/55

(54) **METHOD AND SYSTEM FOR VALIDATING AIR TRAFFIC CONTROL INSTRUCTIONS FOR REDUCING RUNWAY INCURSION**

(30) Priority: 02.05.2024 US 202463641485 P
(71) Applicant: Universal Avionics Systems Corporation, Tucson, AZ 85756 (US)
(72) Inventor: SMITH, Thomas, Tucson, Arizona, 85756 (US)
(74) Representative: Pearl Cohen Zedek Latzer Baratz UK LLP

(57) **Abstract**

A method and system for validating Air Traffic Control (ATC) instructions for reducing runway incursion at an aerodrome. The method may include the following steps: identifying, using a voice-to-text software, audio ATC instructions broadcasted over an audio channel, for a specific aircraft based on an aircraft code; converting the audio ATC instructions for the specific aircraft into text, using the voice-to-text software, yielding ATC text instructions; presenting the ATC text instructions to a pilot of the specific aircraft, over an electronic display showing runways at the aerodrome and the location of the specific aircraft, and requesting the pilot to confirm receipt of the ATC text instructions; visualizing the ATC text instructions by presenting a route corresponding to the ATC text instruction along the runways presented over the electronic display; and alerting the pilot via the electronic display in a case that the specific aircraft strays away from the route.

## Description

### FIELD OF THE INVENTION

The present invention relates generally to the field of flight safety, and more particularly to reducing runway incursion by validating control tower instructions

### BACKGROUND OF THE INVENTION

According to the Federal Aviation Administration (FAA), a Runway Incursion is defined as an occurrence at an aerodrome involving the incorrect presence of an aircraft, vehicle or person on the protected area of a surface designated for the landing and take-off of aircraft.

The FAA defines a surface incident as an unauthorized or unapproved movement within the designated movement area (excluding runway incursions) or an occurrence in that same area associated with the operation of an aircraft that affects or could affect the safety of flight.

Currently, Air Traffic Control (ATC) instructions are broadcasted over an audio communication channel open for receiving by many aircraft on taxi. The pilots listen carefully to this channel and once they recognize their own aircraft code they memorize or write down the instructions of how to perform the taxi at the aerodrome before take-off or after landing.

The drawbacks of the current handling of ATC instructions by the pilots is the burden on the pilots to memorize and follow the exact ATC instructions which may also change during taxi.

### SUMMARY OF THE INVENTION

In order to address the aforementioned drawbacks, some embodiments of the present invention improve basic technology and provide a computerized method and system for validating Air Traffic Control instructions for reducing runway incursion.
According to embodiments of the present invention, a method and system for validating Air Traffic Control (ATC) instructions for reducing runway incursion at an aerodrome are provided herein.

The method may include the following steps: identifying, using a voice-to-text software, audio ATC instructions broadcasted over an audio channel, for a specific aircraft based on an aircraft code; converting the audio ATC instructions for the specific aircraft into text, using the voice-to-text software, yielding ATC text instructions; presenting the ATC text instructions to a pilot of the specific aircraft, over an electronic display showing runways at the aerodrome and the location of the specific aircraft, and requesting the pilot to confirm receipt of the ATC text instructions; visualizing the ATC text instructions by presenting a route corresponding to the ATC text instruction along the runways presented over the electronic display; and alerting the pilot via the electronic display in a case that the specific aircraft strays away from the route.

Advantageously, the system and method in accordance with some embodiments of the present invention may provide an extra layer of safety by verifying the understanding of the control tower instructions by the pilot, by automatically checking the feedback from the pilot using a computerized platform.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
**Figure 1A** is a high-level block diagram illustrating a system for validating control tower instructions for reducing runway incursion in accordance with embodiments of the present invention;
**Figure 1B** is a high-level block diagram illustrating, in more details, a system for validating control tower instructions for reducing runway incursion in accordance with embodiments of the present invention;
**Figure 2A** is a high-level flowchart illustrating a method of validating control tower instructions for reducing runway incursion in accordance with some embodiments of the present invention;
**Figure 2B** is a high-level flowchart illustrating an alternative method of validating control tower instructions for reducing runway incursion in accordance with other embodiments of the present invention;
**Figure 3** is a diagram illustrating an aspect a in accordance with some embodiments of the present invention; and
**Figure 4** is a diagram illustrating a further aspect a in accordance with some embodiments of the present invention;

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following description, various aspects of the present invention will be described. For purposes of explanation, specific configurations and details are set forth in order to provide a thorough understanding of the present invention. However, it will also be apparent to one skilled in the art that the present invention may be practiced without the specific details presented herein. Furthermore, well-known features may be omitted or simplified in order not to obscure the present invention.

Unless specifically stated otherwise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

In the foregoing detailed description, numerous specific details are set forth in order to provide an understanding of the invention. However, it will be understood by those skilled in the art that the invention can be practiced without these specific details. In other instances, well-known methods, procedures, and components, modules, units, and/or circuits have not been described in detail so as not to obscure the invention. Some features or elements described with respect to one embodiment can be combined with features or elements described with respect to other embodiments.

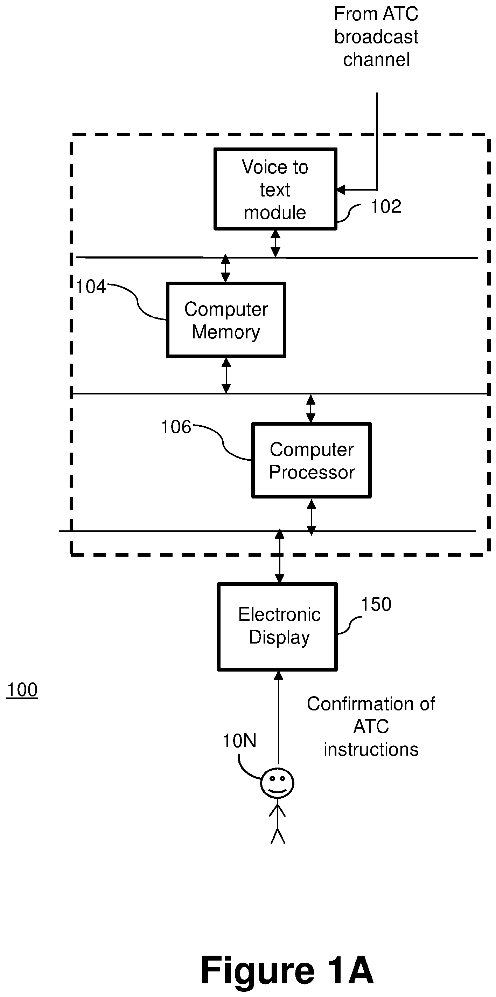

**Figure 1A** is a high-level block diagram illustrating a system for validating Air Traffic Control (ATC) instructions for reducing runway incursion in an aerodrome. System **100** may include a computer processor **104;** an electronic display **150;** and computer readable medium such as computer memory **104** comprising a set of instructions that, when executed, cause computer processor **102** to: identify, using a voice-to-text module **102,** audio ATC instructions broadcasted over an audio channel, for a specific aircraft based on an aircraft code; convert the audio ATC instructions for the specific aircraft into text, using the voice-to-text software, yielding ATC text instructions; present the ATC text instructions to a pilot of the specific aircraft, over electronic display **150** showing runways at the aerodrome and the location of the specific aircraft, and requesting the pilot to confirm receipt of the ATC text instructions; visualize the ATC text instructions by presenting a route corresponding to the ATC text instruction along the runways presented over the electronic display; and alert the pilot via the electronic display **150** in a case that the specific aircraft strays away from the route.

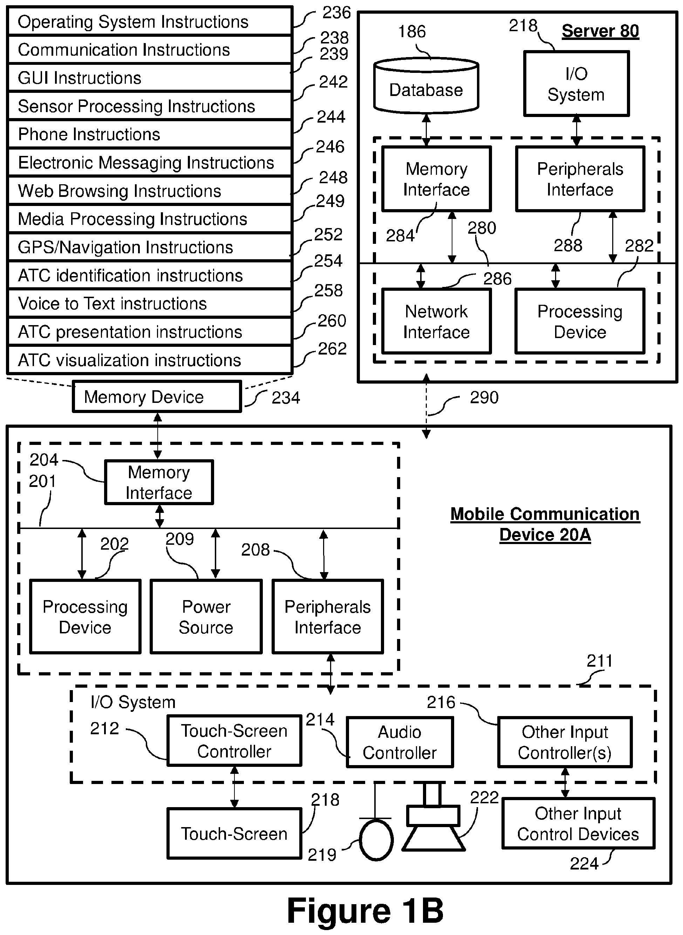

**Figure 1B** shows a block diagram of the configuration of a mobile communication device **20A** accessibly by a pilot and server **80** configured for validating Air Traffic Control (ATC) instructions for reducing runway incursion in an aerodrome.

With regard to the mobile communication device **20A,** and according to some embodiments, the mobile communication device **20A,** directly or indirectly, may access a bus **200** (or another data transfer mechanism) that interconnects subsystems and components for transferring information within the mobile communication device **20A.** For example, bus **200** may interconnect a processing device **202,** a memory interface **204,** and a peripherals interface **208** connected to an I/O system **210.** Power source **209** provides the power to the mobile communication device and it may include a primary or a rechargeable battery (not shown), DC-DC converters (not shown) and other components required for the proper operation mobile communication device **20A.**

In some embodiments, processing device **202** may use a memory interface **204** to access data and a software product stored on a memory device **234** or a non-transitory computer-readable medium device **234.**

According to some embodiments, the peripherals interface **208** may also be connected to sensors, devices, and subsystems to facilitate multiple functionalities. In one embodiment, the peripherals interface **208** may be connected to an I/O system **210** configured to receive signals or input from devices and to provide signals or output to one or more devices that allow data to be received and/or transmitted by the mobile communication device **20.** In one example, the I/O system **210** may include a touch screen controller **212,** audio controller **214,** and/or other types of input controller(s) **216.** The touch screen controller **212** may be coupled to a touch screen **218.** The touch screen **218** and the touch screen controller **212** may, for example, detect contact, and movement, using any of a plurality of touch sensitivity technologies, including but not limited to capacitive, resistive, infrared, and surface acoustic wave technologies as well as other proximity sensor arrays or other elements for determining one or more points of contact with the touch screen **218.** The touch screen **218** may also, for example, be used to implement virtual or soft buttons and/or a keyboard. While a touch screen **218** is shown in **Figure 1B****,** I/O system **210** may include a display screen (e.g., LCD or LED) in place of a touch screen **218.**

Consistent with the present disclosure, the mobile communication device **20A** may use a memory interface **204** to access a memory device **234.** The memory device **234** may store an operating system **236,** such as Android, iOS, MS Windows, Linux, or any other embedded operating system. Operating system **236** may include instructions for handling basic system services and for performing hardware-dependent tasks. In some implementations, the operating system **236** may be a kernel (e.g., Linux kernel).

The memory device **234** may also store communication instructions **238** to facilitate communicating with one or more additional devices, one or more computers, and/or one or more servers. The memory device **234** may include: graphical user interface instructions **240** to facilitate graphic user interface processing; sensor processing instructions **242** to facilitate sensor-related processing and functions; phone instructions **244** to facilitate phone-related processes and functions; electronic messaging instructions **246** to facilitate electronic-messaging-related processes and functions; web browsing instructions **248** to facilitate web browsing-related processes and functions; media processing instructions **250** to facilitate media processing-related processes and functions; GPS/navigation instructions **252** to facilitate GPS and navigation-related processes and instructions; capturing instructions **254** to facilitate processes and functions related to image sensor **226.**

Each of the above-identified instructions and applications may correspond to a set of instructions for performing one or more functions described above. These instructions do not necessarily need to be implemented as separate software programs, procedures, or modules. The memory device **234** may include additional instructions or fewer instructions. Furthermore, various functions of the mobile communication device **20A** may be implemented in hardware and/or software, including in one or more signal processing and/or application-specific integrated circuits.

Still referring to **Figure 1B****,** and according to some embodiments of the present invention, a server **80** for validating air traffic control instructions for reducing runway incursion accessed and presented by at least one mobile communication device **20A.**

Processing device **282** may include at least one processor configured to execute computer programs, applications, methods, processes, or other software to perform embodiments described in the present disclosure.

In some embodiments, processing device **282** may use a memory interface **284** to access data and a software product stored on a memory device or a non-transitory computer-readable medium or to access a database **186.**

According to some embodiments, the network interface **286** may provide two-way data communication to a network. In **Figure 1B****,** communication **290** between mobile communication device **20A** and server **80** is represented by a dashed arrow. In one embodiment, the network interface **286** may include an integrated services digital network (ISDN) card, cellular modem, satellite modem, or a modem to provide a data communication connection over the Internet. As another example, the network interface **286** may include a wireless local area network (WLAN) card. In another embodiment, the network interface **286** may include an Ethernet port connected to radio frequency receivers and transmitters. The specific design and implementation of the network interface **286** may depend on the communications network(s) over which the mobile communication device **20A** and the server **80** may communicate.

According to some embodiments, server **80** may also include a peripherals interface **288** coupled to the bus **280.** The peripherals interface **288** may also be connected to devices, and subsystems to facilitate multiple functionalities as performed by the server **80.** In some embodiments, those devices and subsystems may comprise a display screen (e.g., LCD) a USB port, and the like.

The components and arrangements shown in **Figure 1B** for both server **80** and the mobile communication device **20A** are not intended to limit the disclosed embodiments. As will be appreciated by a person skilled in the art having the benefit of this disclosure, numerous variations and/or modifications may be made to the depicted configuration of server **80** and the mobile communication device **20A.** For example, not all the depicted components may be essential for the operation of server **80** or the mobile communication device **20A** in all cases. Any component may be located in any appropriate part of server **80,** and the components may be rearranged into a variety of configurations while providing the functionality of the disclosed embodiments.

According to some embodiments of the present invention, database **186** is configured to hold runway data of a plurality of aerodromes.

According to some embodiments of the present invention, memory device **234** may further include ATC identification instructions **254** which cause processing device **202,** when executed to identify, audio ATC instructions broadcasted over an audio channel, for a specific aircraft based on an aircraft code.

According to some embodiments of the present invention, memory device **234** may further include voice to text instructions **258** which cause processing device **202,** when executed to convert the audio ATC instructions for the specific aircraft into text, using the voice-to-text software, yielding ATC text instructions

According to some embodiments of the present invention, memory device **234** may further include Memory device **234** may further include ATC presentation instructions **260** which cause processing device **202** to present the ATC text instructions to a pilot of the specific aircraft, over touch screen **218** showing runways at the aerodrome and the location of the specific aircraft, and requesting the pilot to confirm receipt of the ATC text instructions.

According to some embodiments of the present invention, memory device **234** may further include Memory device **234** may further include ATC visualization instructions **262** which cause processing device **202** to visualize over touch screen **218** the ATC text instructions by presenting a route corresponding to the ATC text instruction along the runways presented over the electronic display; and optionally alert the pilot in a case that the specific aircraft strays away from the route.

In some embodiments, electronic displays such as touch screen **218** may be used to provide the pilot with other instructions and serve as a unified platform for communicating with the control tower and others.

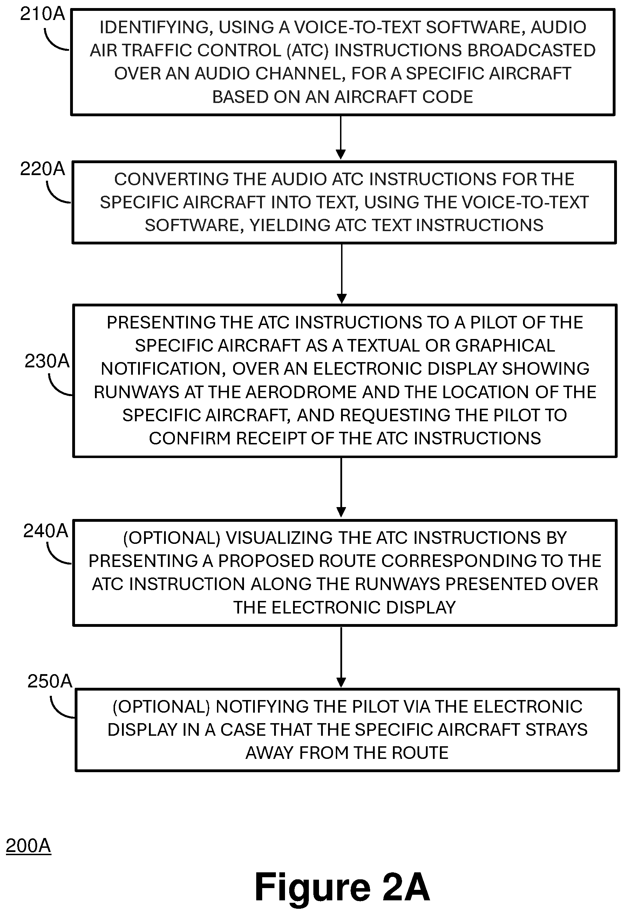

**Figure 2A** is a high-level flowchart illustrating method **200A** of validating control tower instructions for reducing runway incursion, in accordance with some embodiments of the present invention. Method **200A** may include the following steps: identifying, using a voice-to-text software, audio ATC instructions broadcasted over an audio channel, for a specific aircraft based on an aircraft code **210A;** converting the audio ATC instructions for the specific aircraft into text, using the voice-to-text software, yielding ATC text instructions **220A;** presenting the ATC text instructions to a pilot of the specific aircraft, over an electronic display showing runways at the aerodrome and the location of the specific aircraft, and requesting the pilot to confirm receipt of the ATC instructions **230A;** visualizing the ATC instructions by presenting a route corresponding to the ATC instruction along the runways presented over the electronic display **240A;** and alerting the pilot via the electronic display in a case that the specific aircraft strays away from the route **250A.**

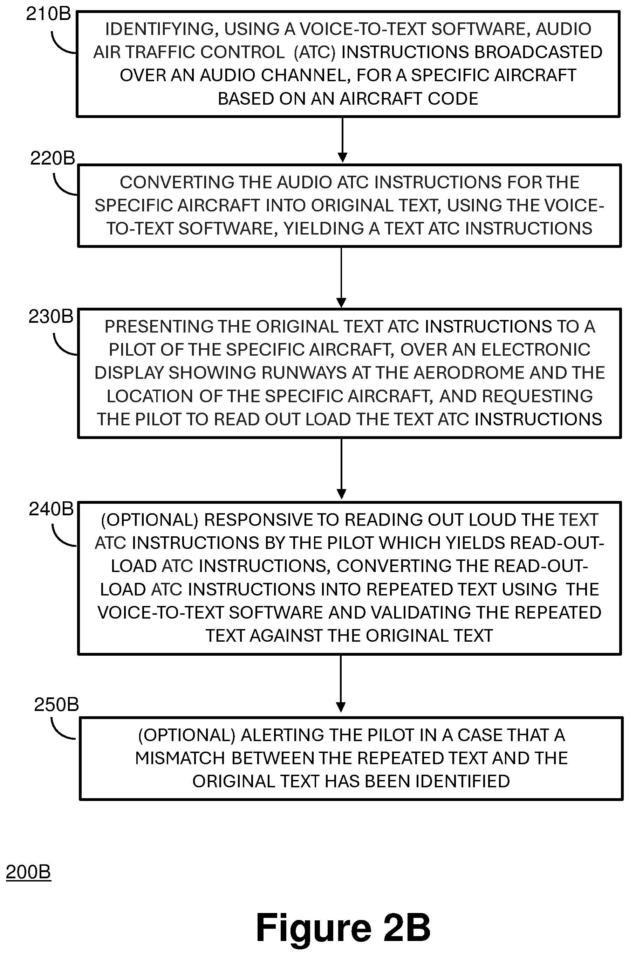

**Figure 2B** is a high-level flowchart illustrating an alternative method **200B** of validating control tower instructions for reducing runway incursion, in accordance with alternative embodiments of the present invention. Method **200B** may include the following steps: identifying, using a voice-to-text software, audio ATC instructions broadcasted over an audio channel, for a specific aircraft based on an aircraft code **210B;** converting the audio ATC instructions for the specific aircraft into original text, using the voice-to-text software, yielding a text ATC instructions **220;** presenting the original text ATC instructions to a pilot of the specific aircraft, over an electronic display showing runways at the aerodrome and the location of the specific aircraft, and requesting the pilot to read out load the text ATC instructions **230B;** responsive to reading out loud the text ATC instructions by the pilot which yields read-out-load ATC instructions, converting the read-out-load ATC instructions into repeated text using the voice-to-text software and validating the repeated text against the original text **240B;** and alerting the pilot in a case that a mismatch between the repeated text and the original text has been identified **250B.**

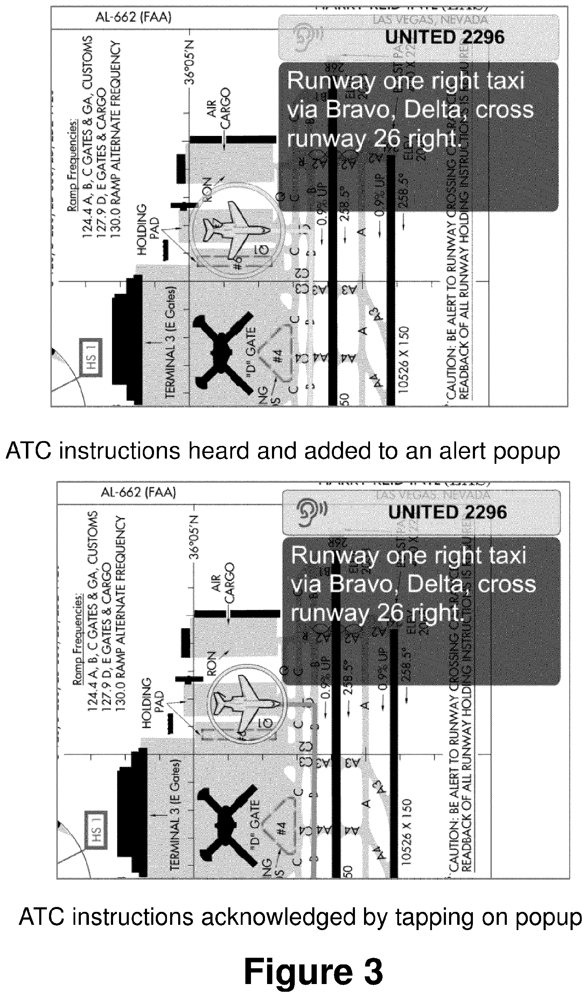

**Figure 3** is a diagram illustrating a display (top) presented to a pilot showing a pop-up (uppermost right corner) with the ATC instruction requesting the pilot to confirm safe receipt of the ATC instructions. Confirmation (bottom) can be achieved by tapping on the pop-up text or by reading out loud the ATC instruction text or other means.

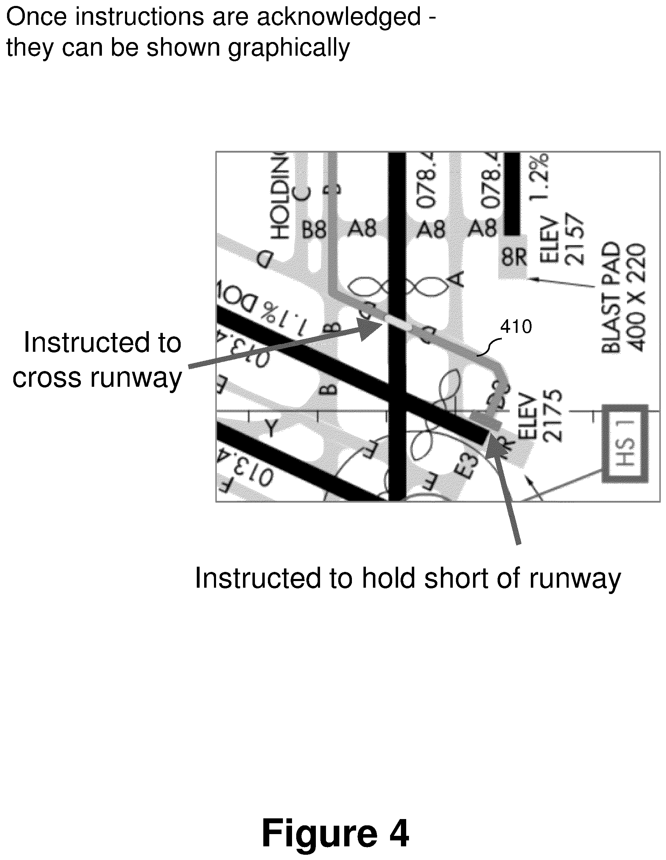

**Figure 4** is a diagram illustrating a further aspect a in accordance with some embodiments of the present invention. On the electronic display, as shown, when instructions are acknowledged they can be shown graphically by visualizing route **410** corresponding to the ATC instructions, possibly with arrows indicating specific points of importance along the route. The route may be updated on the go.

It is further understood that some embodiments of the present invention may be embodied in the form of a system, a method, or a computer program product. Similarly, some embodiments may be embodied as hardware, software, or a combination of both. Some embodiments may be embodied as a computer program product saved on one or more non-transitory computer-readable medium (or mediums) in the form of computer-readable program code embodied thereon. Such non-transitory computer-readable medium may include instructions that when executed cause a processor to execute method steps in accordance with embodiments. In some embodiments, the instructions stored on the computer-readable medium may be in the form of an installed application and in the form of an installation package.

Such instructions may be, for example, loaded by one or more processors and get executed. For example, the computer-readable medium may be a non-transitory computer-readable storage medium. A non-transitory computer-readable storage medium may be, for example, an electronic, optical, magnetic, electromagnetic, infrared, or semiconductor system, apparatus, or device, or any combination thereof.

Computer program code may be written in any suitable programming language. The program code may execute on a single computer system, or on a plurality of computer systems.

One skilled in the art will realize the invention may be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

In the foregoing detailed description, numerous specific details are set forth in order to provide an understanding of the invention. However, it will be understood by those skilled in the art that the invention can be practiced without these specific details. In other instances, well-known methods, procedures, and components, modules, units, and/or circuits have not been described in detail so as not to obscure the invention. Some features or elements described with respect to one embodiment can be combined with features or elements described with respect to other embodiments.

## Claims

1. A method of validating Air Traffic Control (ATC) instructions for reducing runway incursion in an aerodrome, the method comprising:
identifying, using a voice-to-text software, audio ATC instructions broadcasted over an audio channel, for a specific aircraft based on an aircraft code;
converting the audio ATC instructions for the specific aircraft into text, using the voice-to-text software, yielding ATC text instructions; and
presenting the ATC instructions to a pilot of the specific aircraft as a textual or graphical notification, over an electronic display showing runways at the aerodrome and the location of the specific aircraft, and requesting the pilot to confirm receipt of the ATC instructions.

2. The method of claim 1, further comprising visualizing the ATC instructions by presenting a proposed route corresponding to the ATC instruction along the runways presented over the electronic display.

3. The method of claim 2, further comprising notifying the pilot via the electronic display in a case that the specific aircraft strays away from the route.

4. The method of claim 1, further comprising: responsive to reading out loud the text atc instructions by the pilot which yields read-out-load ATC instructions, converting the read-out-load ATC instructions into repeated text using the voice-to-text software and validating the repeated text against the original text.

5. The method of claim 4, further comprising alerting the pilot in a case that a mismatch between the repeated text and the original text has been identified.

6. A system of validating Air Traffic Control (ATC) instructions for reducing runway incursion in an aerodrome, the system comprising:
a computer processor;
an electronic display;
computer readable medium comprising a set of instructions that, when executed, cause the computer processor to:
identify, using a voice-to-text software, audio ATC instructions broadcasted over an audio channel, for a specific aircraft based on an aircraft code;
convert the audio ATC instructions for the specific aircraft into text, using the voice-to-text software, yielding ATC text instructions; and
present the ATC instructions to a pilot of the specific aircraft as a textual or graphical notification, over the electronic display showing runways at the aerodrome and the location of the specific aircraft, and requesting the pilot to confirm receipt of the ATC instructions.

7. The system of claim 6, wherein the computer processor is further configured to visualize the ATC instructions by presenting a proposed route corresponding to the ATC instruction along the runways presented over the electronic display.

8. The system of claim 6, wherein the computer processor is further configured to notify the pilot via the electronic display in a case that the specific aircraft strays away from the route.

9. The system of claim 6, wherein the computer processor is further configured to: responsive to reading out loud the text ATC instructions by the pilot which yields read-out-load ATC instructions, convert the read-out-load ATC instructions into repeated text using the voice-to-text software and validating the repeated text against the original text.

10. The system of claim 9, wherein the computer processor is further configured to alert the pilot in a case that a mismatch between the repeated text and the original text has been identified.

11. A non-transitory computer readable medium for validating Air Traffic Control (ATC) instructions for reducing runway incursion in an aerodrome, the computer readable medium comprising a set of instructions that, when executed, cause at least one computer processor to:
identify, using a voice-to-text software, audio ATC instructions broadcasted over an audio channel, for a specific aircraft based on an aircraft code;
convert the audio ATC instructions for the specific aircraft into text, using the voice-to-text software, yielding ATC text instructions; and
present the ATC instructions to a pilot of the specific aircraft as a textual or graphical notification, over a electronic display showing runways at the aerodrome and the location of the specific aircraft, and requesting the pilot to confirm receipt of the ATC instructions.

12. The non-transitory computer readable medium of claim 11, further comprising a set of instructions that, when executed, cause the at least one computer processor to visualize the ATC instructions by presenting a proposed route corresponding to the ATC instructions along the runways presented over the electronic display.

13. The non-transitory computer readable medium of claim 11, further comprising a set of instructions that, when executed, cause the at least one computer processor to notify the pilot via the electronic display in a case that the specific aircraft strays away from the route.

14. The non-transitory computer readable medium of claim 11, further comprising a set of instructions that, when executed, cause the at least one computer processor to: responsive to reading out loud the text ATC instructions by the pilot which yields read-out-load ATC instructions, convert the read-out-load ATC instructions into repeated text using the voice-to-text software and validating the repeated text against the original text.

15. The non-transitory computer readable medium of claim 14, further comprising a set of instructions that, when executed, cause the at least one computer processor to alert the pilot in a case that a mismatch between the repeated text and the original text has been identified
